# EUROPÄISCHE PATENTSCHRIFT

(11) **EP 3 486 931 B1**
(45) Veröffentlichungstag und Bekanntmachung des Hinweises auf die Patenterteilung: **09.12.2020**
(21) Anmeldenummer: 18201351.6
(22) Anmeldetag: 18.10.2018
(51) Int. Cl.: H01H 3/12

(54) **TASTSCHALTER UND KRAFTFAHRZEUG MIT EINEM TASTSCHALTER**
PUSH-BUTTON SWITCH AND MOTOR VEHICLE WITH PUSH BUTTON SWITCH
COMMUTATEUR À EFFLEUREMENT ET VÉHICULE AUTOMOBILE DOTÉ D'UN COMMUTATEUR À EFFLEUREMENT

(30) Priorität: 21.11.2017 DE 102017220780
(43) Veröffentlichungstag der Anmeldung: 22.05.2019
(73) Patentinhaber: VOLKSWAGEN AKTIENGESELLSCHAFT, 38440 Wolfsburg (DE)
(72) Erfinder: Thrien, Markus, 45968 Gladbeck (DE); Petter, Niels, 45133 Essen (DE); Oong, Alexander, 40477 Düsseldorf (DE)

(56) Entgegenhaltungen:
- WO-A1-2011/000910
- WO-A1-2016/183498
- US-A- 6 060 676

## Beschreibung

Die vorliegende Erfindung betrifft einen Tastschalter, insbesondere einen Tastschalter mit einer haptischen Rückmeldung, der für eine großflächige Ausführung geeignet ist. Die Erfindung betrifft weiterhin ein Kraftfahrzeug, in dem ein erfindungsgemäßer Tastschalter verbaut ist.

Im Rahmen einer modernen Innenraumgestaltung von Kraftfahrzeugen besteht zunehmend die Notwendigkeit, an unterschiedlichsten Positionen im Kraftfahrzeug verhältnismäßig große und gegebenenfalls schwere Elemente zu verbauen, die dabei gleichzeitig noch als Tastschalter dienen sollen. Beispielsweise können Tastschalter in Form von Touchscreens, Displays oder Tasten in der Mittelkonsole, dem Lenkrad, den Türen, dem Dach oder dem Armaturenbrett vorgesehen sein, bei denen die Fahrzeuginsassen durch einen Fingerdruck eine gewünschte Funktion auslösen können. Dabei ist es wünschenswert, dass die erforderlichen Betätigungskräfte unabhängig vom Druckpunkt auf der Fläche des Tastschalters im Wesentlichen gleich bleiben. Aus Kostengründen ist es zudem erstrebenswert, wenn die Tastschalter mit nur einem Sensor oder Element zur haptischen Rückmeldung auskommen.

DE 10 2007 040 604 A1 beschreibt eine Schaltvorrichtung zum Ein- bzw. Ausschalten eines Verbrauchers, insbesondere eines Motors in einem Fahrzeug. Die Schaltvorrichtung umfasst ein Gehäuse, ein Betätigungselement, ein Schaltelement und ein Display. Das Betätigungselement ist auf dem Display angeordnet. Das Schaltelement ist durch das Betätigungselement aktivierbar, wobei mittels des Schaltelements wenigstens ein Schaltsignal für eine Steuereinheit erzeugt wird. Das Schaltelement ist ein Piezoschalter, der derart angeordnet ist, dass dieser das Schaltsignal bei einem Einschieben des Betätigungselements in das Gehäuse erzeugt. Da sich das Betätigungselement relativ leicht im Gehäuse verkannten kann, ist die beschriebene Lösung nur für kleinere Tastschalter anwendbar

US 2012/0038562 A1 beschreibt ein elektronisches Gerät, das ein Gehäuse, ein berührungsempfindliches Display an einer Vorderseite des Gehäuses und einen Aktuator aufweist. Der Aktuator ist zwischen der Vorderseite und einer Rückseite des Gehäuses angeordnet und ist so konfiguriert, dass das berührungsempfindliche Display samt der Vorderseite bei Betätigung relativ zur Rückseite des Gehäuses bewegt werden. Der Aktuator umfasst mehrere Piezoscheiben. Der beschriebene Mechanismus neigt zum Verkippen und benötigt zudem mehrere Sensoren. Zudem ist die Mechanik relativ unpräzise, so dass große Spalten zum angrenzenden Gehäuse auftreten.

DE 299 18 540 U1 beschreibt einen Tastschalter für eine Computertastatur. Der Tastschalter umfasst eine Taste, einen Gummikegel, einen ersten Hebel, einen zweiten Hebel und einen Grundkörper. Der erste Hebel und der zweite Hebel sind über einen Gelenkmechanismus miteinander verbunden und können sich scherenförmig zueinander bewegen. Im Grundkörper ist ein vertiefter Aufnahmeraum ausgebildet, der unterhalb des ersten Hebels und des zweiten Hebels vorgesehen ist. Wenn die beiden Hebel mittels der Taste gelenkig nach unten bewegt werden, können diese in den Aufnahmeraum hinein sinken.

DE 11 2013 005 212 T5 beschreibt einen Tastenmechanismus für eine Computertastatur. Jede Taste umfasst eine Tastenkappen-Baugruppe, eine Stützstruktur und ein Schmetterlingsscharnier. Das Schmetterlingsscharnier umfasst zwei separate Flügel, die einander benachbart positioniert sind, so dass zwischen den zwei Flügeln eine Kavität gebildet wird. Jeder Flügel umfasst ein Paar Drehstifte und ein Paar Tastenkappen-Baugruppen-Stifte. Dabei sind die Drehstifte mit der Stützstruktur gekoppelt und die Tastenkappen-Baugruppen-Stifte mit der Tastenkappen-Baugruppe gekoppelt. Ein weiteres Beispiel von Tastatur wird in der WO-A-2011/000910 beschrieben.

Die für Computertastaturen benutzten Lösungen können keine großen Lasten tragen, wie beispielsweise 5-Zoll-Displays. Größere Flächen fangen zudem an zu kippen, so dass bei Tasten wie der Leertaste, der Umschalttaste oder der Eingabetaste oftmals eine Verschiebung der Tasten senkrecht zur Betätigungsrichtung sichtbar ist und teils mehrere Schaltelemente benötigt werden, damit sie sicher auslösen.

Es ist eine Aufgabe der Erfindung, einen alternative Aufbau eines Tastschalters aufzuzeigen, der für eine großflächige Ausführung geeignet ist.

Diese Aufgabe wird durch einen Tastschalter mit den Merkmalen des Anspruchs 1 gelöst. Bevorzugte Ausgestaltungen der Erfindung sind Gegenstand der abhängigen Ansprüche.

Die vorliegende Konstruktion ermöglicht einen sehr flachen Aufbau großer Tastschalter, die z.B. ein Display tragen können. Die Tastschalter sind sehr einfach aufgebaut, kostengünstig, da die beiden Hebel baugleich sein können, und gleichzeitig robust gegen Überlastung. Durch die Hebelmechanik wird nur ein zentrales Schaltelement benötigt, um eine große Fläche zu einem Tastschalter zu machen. Die haptische Wahrnehmung bei Betätigung, d.h. bei einem Fingerdruck auf die Tastenkappe, entspricht der eines gewohnten Tastenaufbaus, der in Anbetracht der Tastengröße aber eine lange Führung in Betätigungsrichtung benötigen würde.

Gemäß einem Aspekt der Erfindung sind der erste Hebel und der zweite Hebel spielfrei auf der Grundplatte gelagert. Durch die spielfreie Lagerung der Hebel auf der Grundplatte wird die Tastenkappe in ihrer Ruhelage sehr gut relativ zur Grundplatte positioniert. Gleichzeitig verhindert die Konstruktion weitgehend ein Verdrehen der Tastenkappe um die Betätigungsrichtung.

Gemäß einem Aspekt der Erfindung weisen die Drehlager jeweils eine Auflage und zumindest einen Niederhalter auf. Auf diese Weise werden für die Drehlager keine beweglichen Elemente benötigt, so dass ein sehr einfacher und verschleißarmer Aufbau erzielt wird.

Gemäß einem Aspekt der Erfindung ist zumindest ein Niederhalter ein separates Bauteil, das mit der Grundplatte verbunden wird. Dies vereinfacht die Montage des Tastschalters. Zunächst können die Hebel relativ zur Grundplatte montiert werden, im Anschluss wird dann die Tastenkappe befestigt. Zuletzt wird dann der separate Niederhalter eingesetzt, um die Konstruktion zu stabilisieren.

Durch die zumindest weitgehend spielfreie Verbindung wird erreicht, dass sich die Tastenkappe mit einer nahezu parallelen Verschiebung in Richtung der Grundplatte bewegt. Dabei spielt es keine Rolle, an welcher Position ein Fingerdruck auf die Tastenkappe erfolgt.

Gemäß einem Aspekt der Erfindung greifen das erste Hebelende des ersten Hebels und das erste Hebelende des zweiten Hebels in korrespondierende Nuten in der Tastenkappe ein. Auf diese Weise wird eine einfache und kostengünstige Lösung für eine spielfreie und kraftschlüssige Verbindung zwischen der Tastenkappe und den Hebeln realisiert. Es werden keine aufwändigen mechanischen Gelenke benötigt.

Gemäß einem Aspekt der Erfindung sind das zweite Hebelende des ersten Hebels und das zweite Hebelende des zweiten Hebels miteinander verzahnt. Auf diese Weise wird eine einfache und kostengünstige Lösung für eine spielfreie und kraftschlüssige Verbindung zwischen den Hebeln realisiert, die ohne zusätzliche bewegliche oder verformbare Teile auskommt. Während der Montage müssen die Zahnungen der Hebelenden lediglich ineinander gesteckt werden, so dass eine einfache Montage gewährleistet ist.

Gemäß einem Aspekt der Erfindung sind der erste Hebel und der zweite Hebel mittig oder außermittig auf der Grundplatte gelagert. Durch die Wahl der Position der Lagerung der Hebel kann der Hub der Tastenkappe festgelegt werden. Somit kann der Tastschalter konstruktiv an verschiedene Anwendungen angepasst werden.

Gemäß einem Aspekt der Erfindung weist die Grundplatte einen Anschlag für den ersten Hebel oder den zweiten Hebel auf, der eine Ruheposition festlegt. Durch den Anschlag wird eine definierte Höhenlage der Tastenkappe in der Ruheposition erzielt, was für einen oberflächenbündigen Einbau des Tastschalters vorteilhaft ist.

Gemäß einem Aspekt der Erfindung weist das Schaltelement zumindest eines der folgenden Elemente auf: eine Schnappscheibe (engl. Dome Switch), ein Piezoelement, ein Elektromagnet oder ein Vibrationselement. Die erfindungsgemäße Lösung benötigt nur ein zentrales Schaltelement für die haptische Rückmeldung. Zum Detektieren einer Kraft kann dies beispielsweise ein Dome Switch sein, wie er von Computertastaturen bekannt ist. Für eine Kraftrückkopplung (engl. Force Feedback) kann mittels eines Piezoelements oder eines Elektromagneten ein Hub der gesamten Tastenkappe entgegen der Betätigungsrichtung erzeugt werden. Für eine haptische Rückmeldung in Form einer Vibration kann das zentrale Schaltelement ein Vibrationselement sein.

Gemäß einem Aspekt der Erfindung ist ein Display auf der Tastenkappe angeordnet. Das Display kann genutzt werden, um variable Inhalte auf dem Tastschalter anzuzeigen und den Tastschalter so an unterschiedliche Betriebssituationen anzupassen. Insbesondere wird auch die Möglichkeit geschaffen, große Displays mit einem haptischen Feedback zu versehen.

Besonders vorteilhaft wird ein erfindungsgemäßer Tastschalter in einem Fahrzeug, insbesondere einem Kraftfahrzeug eingesetzt. Geeignet ist ein solcher Tastschalter für praktisch alle Bedienelemente, beispielsweise im Dachbereich, in den Türen, als Lenkradtaste, für ein Navigations- oder Multimediasystem, die Bedienung der Klimaanlage, etc. Die Anwendung ist aber nicht auf den Fahrzeugbereich beschränkt, grundsätzlich ist der erfindungsgemäße Tastschalter überall dort einsetzbar, wo dünne Tasten, Displays oder Touchscreens benötigt werden und wo gleichzeitig ein haptisches Feedback gewünscht wird.

Weitere Merkmale der vorliegenden Erfindung werden aus der nachfolgenden Beschreibung und den angehängten Ansprüchen in Verbindung mit den Figuren ersichtlich.
- Fig. 1: zeigt eine vereinfachte schematische Darstellung einer Seitenansicht eines Tastschalters in einer Ruheposition;
- Fig. 2: zeigt den Tastschalter aus Fig. 1 in einer Betätigungsposition;
- Fig. 3: zeigt eine Grundplatte einer bevorzugten Ausführungsform des Tastschalters;
- Fig. 4: zeigt ein Hebelpaar der bevorzugten Ausführungsform des Tastschalters;
- Fig. 5: zeigt die Grundplatte aus Fig. 3 mit dem montierten Hebelpaar aus Fig. 4;
- Fig. 6: zeigt eine Tastenkappe der bevorzugten Ausführungsform des Tastschalters;
- Fig. 7: zeigt ein Beispiel des vollständig zusammengebauten Tastschalters;
- Fig. 8: zeigt einen ersten Schnitt durch den Tastschalter aus Fig. 7 entlang der X-Z-Ebene;
- Fig. 9: zeigt einen zweiten Schnitt durch den Tastschalter aus Fig. 7 entlang der X-Z-Ebene; und
- Fig. 10: zeigt schematisch einen Innenraum eines Kraftfahrzeugs, in dem erfindungsgemäße Tastschalter verbaut sind.

Zum besseren Verständnis der Prinzipien der vorliegenden Erfindung werden nachfolgend Ausführungsformen der Erfindung anhand der Figuren detaillierter erläutert. Es versteht sich, dass sich die Erfindung nicht auf diese Ausführungsformen beschränkt und dass die beschriebenen Merkmale auch kombiniert oder modifiziert werden können, ohne den Schutzbereich der Erfindung zu verlassen, wie er in den angehängten Ansprüchen definiert ist.

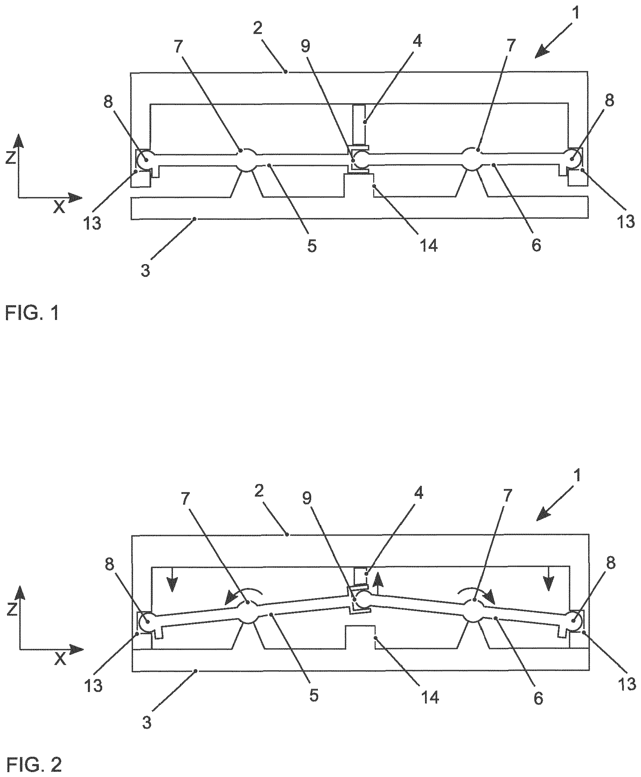

Fig. 1 zeigt eine vereinfachte schematische Darstellung einer Seitenansicht eines Tastschalters 1 in einer Ruheposition. Dargestellt ist ein Schnitt entlang der X-Z-Ebene, wobei Z die Betätigungsrichtung des Tastschalters 1 ist. Der Tastschalter 1 weist eine Tastenkappe 2, eine Grundplatte 3, ein Schaltelement 4, einen ersten Hebel 5 und einen zweiten Hebel 6 auf. In diesem Beispiel ist das Schaltelement 4 ein Dome-Switch. Die Tastenkappe 2 ist beweglich, wohingegen die Grundplatte 3 am Einbauort des Tastschalters 1 fixiert ist. Der erste Hebel 5 und der zweite Hebel 6 sind mittels je eines Drehlagers 7 in Y-Richtung drehbar auf der Grundplatte 3 gelagert. Vorzugsweise sind die beiden Hebel 5, 6 in Z- und X-Richtung fest positioniert. Die bewegliche Tastenkappe 2 ist an zwei gegenüberliegenden Seiten mit jeweils einem ersten Hebelende 8 der beiden Hebel 5, 6 beweglich verbunden, beispielsweise indem die Hebelenden 8 in korrespondierende Nuten 13 in der Tastenkappe 2 eingreifen. Die Nuten 13 sind dabei so gestaltet, dass in Z-Richtung kaum Spiel vorhanden ist und die Hebelenden 8 in X-Richtung aus der Nut 13 rutschen können, wenn sich diese Hebelenden 8 in Richtung Grundplatte 3 bewegen. An einem zweiten Hebelende 9 sind der erste Hebel 5 und der zweite Hebel 6 beweglich miteinander verbunden, so dass zumindest in einem gewissen Winkelbereich von etwa ±6° eine Bewegung von einem Hebel 5, 6 auf den anderen übertragen wird. Vorzugsweise ist diese Verbindung in Z-Richtung spielfrei. Das Schaltelement 4 ist derart an der Tastenkappe 2 angeordnet, dass es vom zweiten Hebelende 9 des ersten Hebels 5 oder vom zweiten Hebelende 9 des zweiten Hebels 6 betätigbar ist. Die Federkraft des Schaltelements 4, die beispielsweise in der Größenordnung von 6N liegen kann, hält das System in Ruhe. Dabei werden die beiden Hebel 5, 6 gegen einen Anschlag 14 gedrückt. Auf der anderen Seite stützt sich das Schaltelement 4 an der Tastenkappe 2 ab, die von den anderen Hebelenden 8 in Position gehalten wird. Abhängig vom gewählten Spiel der Hebel 5, 6 und der Tastenkappe 2 untereinander wird die Tastenkappe 2 in ihrer Ruhelage durch die Hebelmechanik sehr gut in X und Y positioniert. Gleichzeitig verhindert die Konstruktion weitgehend ein Verdrehen der Tastenkappe 2 um die Z-Achse.

Fig. 2 zeigt den Tastschalter aus Fig. 1 in einer Betätigungsposition. Das Schaltelement 4 wird bei steigender Betätigungskraft des Nutzers durch die Aufwärtsbewegung der beweglich miteinander verbundenen Hebelenden 9 der beiden Hebel 5, 6 komprimiert. Gleichzeitig bewegt sich die Tastenkappe 2 parallel auf die Grundplatte 3 zu und drückt von der anderen Seite auf das Schaltelement. Das Schaltelement 4 kollabiert schließlich, wenn seine Auslösekraft erreicht wurde, beispielsweise 6N. Aufgrund der in Z-Richtung weitgehend spielfreien Verbindungen der Hebel 5, 6 untereinander sowie mit der Tastenkappe 2 und den Drehlagern 7 bewegt sich die Tastenkappe 2 mit einer nahezu parallelen Verschiebung in Z-Richtung relativ zur Grundplatte 3 unabhängig davon, an welcher Position in X und Y ein Fingerdruck auf die Tastenkappe 2 erfolgt. Die Bewegungen der verschiedenen Elemente sind durch die eingezeichneten Pfeile angedeutet.

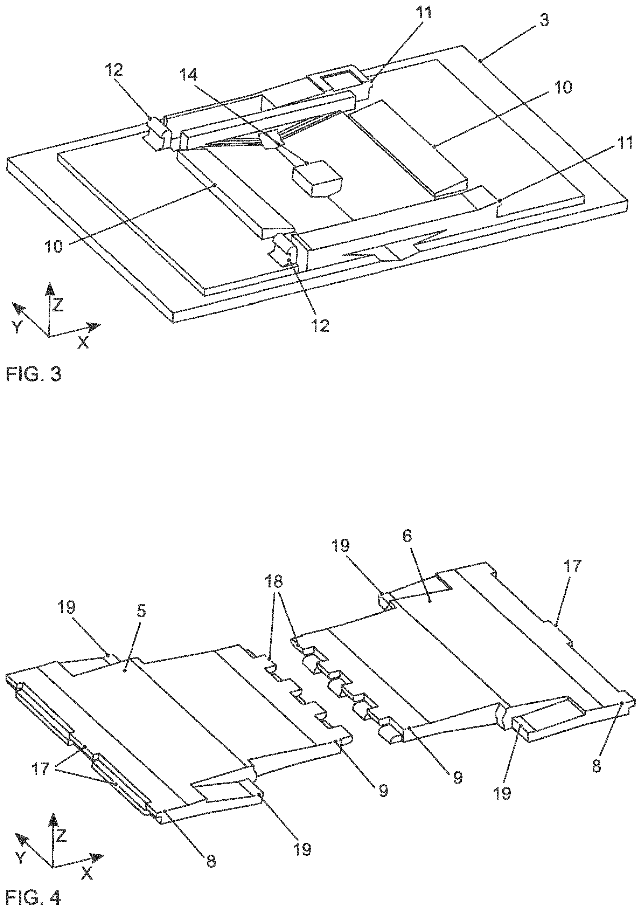

Nachfolgend sollen bevorzugte Ausführungsformen der Erfindung anhand der Figuren 3 bis 10 beschrieben werden.

Fig. 3 zeigt eine Grundplatte 3 einer bevorzugten Ausführungsform des Tastschalters. Ebenfalls dargestellt ist das verwendete Koordinatensystem. In dieser Ausführungsform werden die Drehlager für die Hebel durch je eine Auflage 10 und zwei Niederhalter 11, 12 gebildet. Dabei ist für jedes Drehlager der erste Niederhalter 11 fest an die die Grundplatte 3 angeformt, während der zweite Niederhalter 12 ein separates Bauteil ist, das in die Grundplatte eingerastet, geklemmt oder geklebt wird. Auf diese Weise lässt sich die spätere Montage der Hebel vereinfachen. In etwa mittig zwischen den Auflagen 10 befindet sich ein Anschlag 14 auf der Grundplatte 3, auf dem die Hebel in ihrer Ruheposition zu liegen kommen.

Fig. 4 zeigt ein Hebelpaar der bevorzugten Ausführungsform des Tastschalters. In dieser Ausführungsform sind der erste Hebel 5 und der zweite Hebel 6 baugleich, wodurch sich Herstellungskosten einsparen lassen. Die Hebel 5, 6 weisen an einem ersten Hebelende 8 Vorsprünge 17 auf, die im zusammengebauten Zustand des Tastschalters mit korrespondierenden Nuten der Tastenkappe zusammenwirken und so die bewegliche Verbindung zur Tastenkappe herstellen. An einem zweiten Hebelende 9 weisen die Hebel 5, 6 eine Zahnung 18 auf, mittels derer die bewegliche, spielfreie Verbindung zwischen den Hebel 5, 6 realisiert wird. An den beiden Seiten jedes Hebels 5, 6 sind Kontaktflächen 19 angeordnet. Diese dienen dazu, die Hebel 5, 6 mit Hilfe der Niederhalter fest auf der Grundplatte zu positionieren.

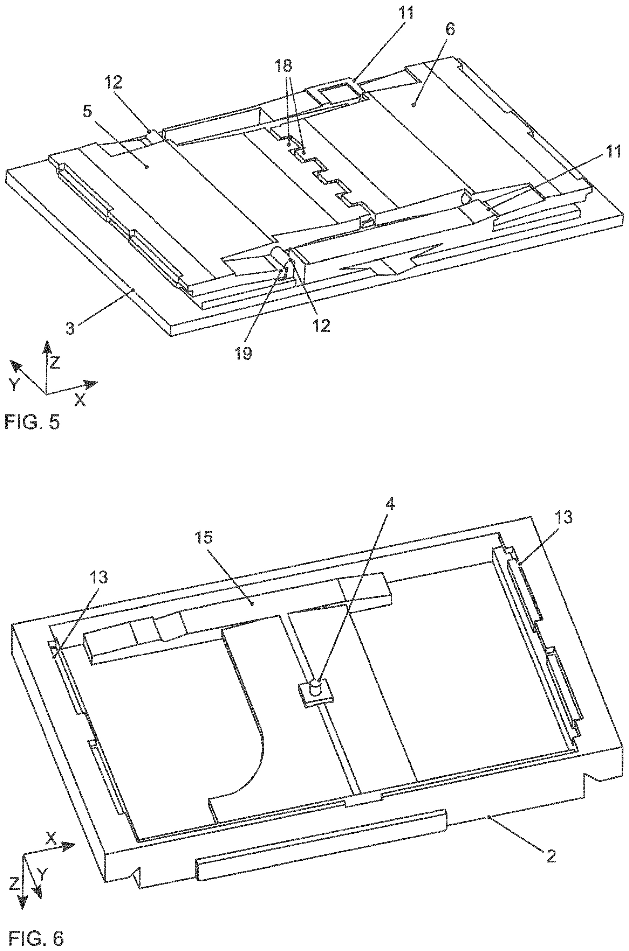

Fig. 5 zeigt die Grundplatte 3 aus Fig. 3 mit dem montierten Hebelpaar aus Fig. 4. Die Hebel 5, 6 liegen auf den Auflagen der Drehlager auf und werden durch die Niederhalter 11, 12 an den Kontaktflächen 19 gehalten. Zudem greifen die Zahnungen 18 der beiden Hebel 5, 6 ineinander, so dass eine kraftschlüssige, bewegliche Verbindung zwischen den Hebeln 5, 6 existiert.

Fig. 6 zeigt eine Tastenkappe 2 der bevorzugten Ausführungsform des Tastschalters. Dabei ist die Tastenkappe 2 in einer Ansicht von unten dargestellt, d.h. die Tastenkappe 2 wurde um 180° um die X-Achse gedreht. An den kurzen Kanten der Tastenkappe 2 sind Nuten 13 angeordnet, die mit den Vorsprüngen am jeweiligen ersten Hebelende der Hebel zusammenwirken und eine bewegliche Verbindung zu den Hebeln herstellen. Weiterhin ist im Inneren der Tastenkappe 2 eine Positionierhilfe 15 für das Schaltelement 4 angeordnet, durch die die Positionierung des Schaltelements 4 erleichtert wird.

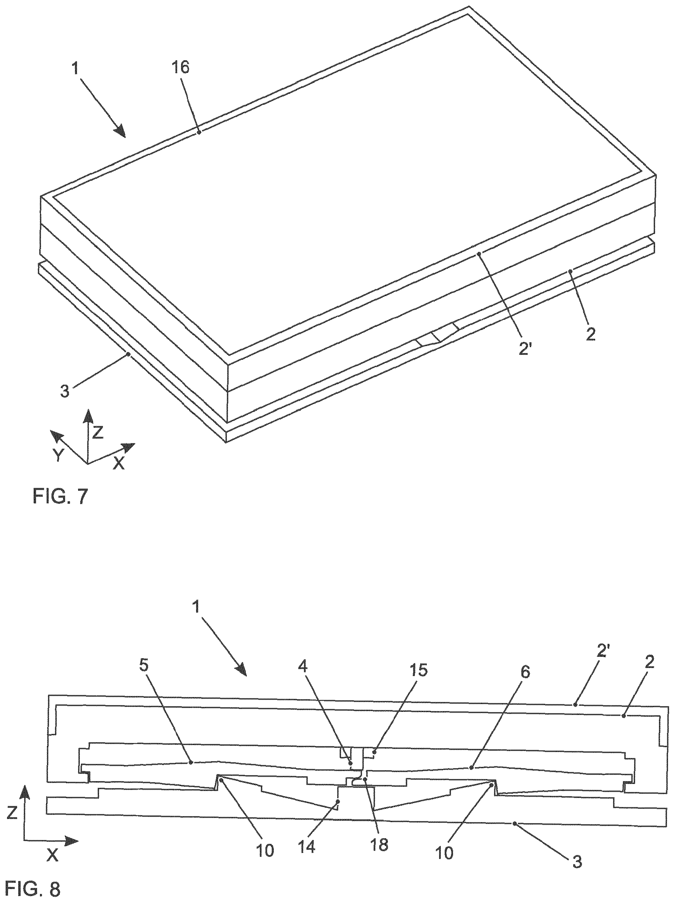

Fig. 7 zeigt ein Beispiel des vollständig zusammengebauten Tastschalters 1. In diesem Beispiel ist zusätzlich zur Tastenkappe 2 ein Tastenkappenaufsatz 2' verbaut, d.h. die Tastenkappe 2 ist aus zwei Teilen zusammengesetzt. Eingelassen in den Tastenkappenaufsatz 2' ist ein Display 16, mit dem variable Inhalte auf dem Tastschalter 1 dargestellt werden können. Im zusammengebauten Zustand hat der Tastschalter 1 eine Breite von 125mm in X-Richtung, eine Tiefe von 76mm in Y-Richtung und eine Höhe von 22mm in Z-Richtung. Die Höhe in Z-Richtung für den Hebelmechanismus nimmt dabei ca. 7mm in Anspruch bei einem Hub der Tastenkappe von -0,6mm.

Fig. 8 zeigt einen ersten Schnitt durch den Tastschalter 1 aus Fig. 7 entlang der X-Z-Ebene. In der gezeigten Darstellung verläuft der Schnitt mittig durch den Anschlag 14. Gut zu sehen ist die Kombination aus Tastenkappe 2 und Tastenkappenaufsatz 2'. Ebenso ist gut zu erkennen, wie die Auflagen 10 der Grundplatte 3 jeweils eine Drehachse für den ersten Hebel 5 und den zweiten Hebel 6 definieren. Die Zahnungen 18 der beiden Hebel 5, 6 greifen ineinander und formen so eine bewegliche, kraftschlüssige Verbindung zwischen den Hebeln 5, 6. In der dargestellten Ruheposition liegen die Hebelenden auf den Anschlag auf, gegen den sie durch das Schaltelement 4 gedrückt werden. Ebenfalls erkennbar ist die exakte Positionierung des Schaltelements 4 durch die Positionierhilfe 15.

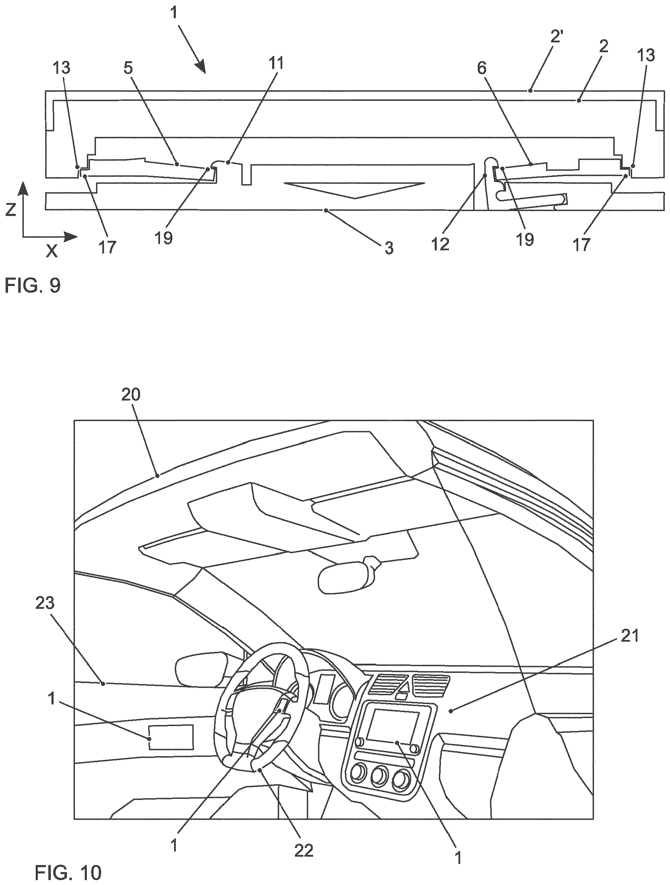

Fig. 9 zeigt einen zweiten Schnitt durch den Tastschalter 1 aus Fig. 7 entlang der X-Z-Ebene. In der gezeigten Darstellung verläuft der Schnitt etwa mittig durch die Niederhalter 11, 12. Gut zu erkennen ist, wie die Niederhalter 11, 12 mit den Kontaktflächen 19 zusammenwirken, um die Hebel 5, 6 fest auf der Grundplatte 3 zu positionieren. Weiterhin ist ersichtlich, dass der zweite Niederhalter 12 als separates Bauteil ausgestaltet ist, das in die Grundplatte 3 eingerastet, geklemmt oder geklebt wird. Durch das Zusammenwirken der Vorsprünge 17 mit den korrespondierenden Nuten 13 der Tastenkappe 2 wird die erforderliche bewegliche Verbindung zwischen den Hebeln 5, 6 und der Tastenkappe 2 realisiert.

Fig. 10 zeigt schematisch einen Innenraum eines Kraftfahrzeugs 20, in dem erfindungsgemäße Tastschalter 1 verbaut sind. Ein erster Tastschalter 1 mit Display ist in einem Armaturenbrett 21 des Kraftfahrzeugs 20 angeordnet, beispielsweise zur Bedienung eines Infotainment-Systems. Ein weiterer, erheblich kleinerer Tastschalter 1 ist im Lenkrad 22 verbaut. Mit seiner Hilfe kann beispielsweise die Bedienung einer Freisprecheinrichtung oder die Steuerung eines Tempomaten erfolgen. Ein dritter Tastschalter 1 ist in der Tür 23 der Fahrerseite angeordnet. Mit diesem Tastschalter 1 kann z.B. das Öffnen der Tür 23 veranlasst werden, wobei gegebenenfalls auf einem Display des Tastschalters 1 ein Hinweis eingeblendet werden kann, wenn durch den benachbarten Verkehr eine Gefahrensituation vorliegt.

### Bezugszeichenliste

- 1: Tastschalter
- 2: Tastenkappe
- 2': Tastenkappenaufsatz
- 3: Grundplatte
- 4: Schaltelement
- 5: Erster Hebel
- 6: Zweiter Hebel
- 7: Drehlager
- 8: Erstes Hebelende
- 9: Zweites Hebelende
- 10: Auflage
- 11: Erster Niederhalter
- 12: Zweiter Niederhalter
- 13: Nut
- 14: Anschlag
- 15: Positionierhilfe
- 16: Display
- 17: Vorsprung
- 18: Zahnung
- 19: Kontaktfläche
- 20: Kraftfahrzeug
- 21: Armaturenbrett
- 22: Lenkrad
- 23: Tür

## Patentansprüche

1. Tastschalter (1) mit einer Tastenkappe (2), einer Grundplatte (3), einem Schaltelement (4), einem ersten Hebel (5) und einem zweiten Hebel (6), wobei der erste Hebel (5) und der zweite Hebel (6) mittels je eines Drehlagers (7) drehbar auf der Grundplatte (3) gelagert sind, und wobei das Schaltelement (4) von einem zweiten Hebelende (9) des ersten Hebels (5) oder von einem zweiten Hebelende (9) des zweiten Hebels (6) betätigbar ist, **dadurch gekennzeichnet, dass** das Schaltelement (4) an der Tastenkappe (2) angeordnet ist und der erste Hebel (5) und der zweite Hebel (6) jeweils an einem ersten Hebelende (8) beweglich und in Betätigungsrichtung des Tastschalters (1) spielfrei mit der Tastenkappe (2) verbunden sind und am zweiten Hebelende (9) beweglich und in Betätigungsrichtung des Tastschalters (1) spielfrei miteinander verbunden sind.

2. Tastschalter (1) gemäß Anspruch 1, wobei der erste Hebel (5) und der zweite Hebel (6) spielfrei auf der Grundplatte (3) gelagert sind.

3. Tastschalter (1) gemäß Anspruch 1 oder 2, wobei die Drehlager (7) jeweils eine Auflage (10) und zumindest einen Niederhalter (11, 12) aufweisen.

4. Tastschalter (1) gemäß Anspruch 3, wobei zumindest ein Niederhalter (11, 12) ein separates Bauteil ist, das mit der Grundplatte (3) verbunden wird.

5. Tastschalter (1) gemäß einem der vorherigen Ansprüche, wobei das erste Hebelende (8) des ersten Hebels (5) und das erste Hebelende (8) des zweiten Hebels (6) in korrespondierende Nuten (13) in der Tastenkappe (2) eingreifen.

6. Tastschalter (1) gemäß einem der vorherigen Ansprüche, wobei das zweite Hebelende (9) des ersten Hebels (5) und das zweite Hebelende (9) des zweiten Hebels (6) miteinander verzahnt sind.

7. Tastschalter (1) gemäß einem der vorherigen Ansprüche, wobei der erste Hebel (5) und der zweite Hebel (6) mittig oder außermittig auf der Grundplatte (3) gelagert sind.

8. Tastschalter (1) gemäß einem der vorherigen Ansprüche, wobei die Grundplatte (3) einen Anschlag (14) für den ersten Hebel (5) oder den zweiten Hebel (6) aufweist, der eine Ruheposition festlegt.

9. Tastschalter (1) gemäß einem der vorherigen Ansprüche, wobei das Schaltelement (4) zumindest eines der folgenden Elemente aufweist: eine Schnappscheibe, ein Piezoelement, ein Elektromagnet oder ein Vibrationselement.

10. Tastschalter (1) gemäß einem der vorherigen Ansprüche, wobei ein Display (16) auf der Tastenkappe (2) angeordnet ist.

11. Kraftfahrzeug (40), **dadurch gekennzeichnet, dass** das Kraftfahrzeug (40) einen Tastschalter gemäß einem der Ansprüche 1 bis 10 aufweist.

## Claims

1. A push-button switch (1) having a button cap (2), a base plate (3), a switch element (4), a first lever (5), and a second lever (6), wherein the first lever (5) and the second lever (6) are mounted on the base plate (3) so as to be rotatable by means of a respective pivot bearing (7), and wherein the switch element (4) can be actuated by a second lever end (9) of the first lever (5) or by a second lever end (9) of the second lever (6), **characterized in that** the switch element (4) is arranged at the button cap (2), and the first lever (5) and the second lever (6) are each connected at a first lever end (8) to the button cap (2) so as to be movable and without play in the actuation direction of the push-button switch (1), and are connected at the second lever end (9) to one another so as to be movable and without play in the actuation direction of the push-button switch (1).

2. The push-button switch (1) according to claim 1, wherein the first lever (5) and the second lever (6) are mounted on the base plate (3) without play.

3. The push-button switch (1) according to claim 1 or 2, wherein the pivot bearings (7) each have a support (10) and at least one hold-down device (11, 12).

4. The push-button switch (1) according to claim 3, wherein at least one hold-down device (11, 12) is a separate component that is connected to the base plate (3).

5. The push-button switch (1) according to one of the preceding claims, wherein the first lever end (8) of the first lever (5) and the first lever end (8) of the second lever (6) engage in corresponding grooves (13) in the button cap (2).

6. The push-button switch (1) according to one of the preceding claims, wherein the second lever end (9) of the first lever (5) and the second lever end (9) of the second lever (6) are interlocked with one another.

7. The push-button switch (1) according to one of the preceding claims, wherein the first lever (5) and the second lever (6) are mounted centrally or eccentrically on the base plate (3).

8. The push-button switch (1) according to one of the preceding claims, wherein the base plate (3) has a stop (14) for the first lever (5) or the second lever (6), which stop establishes a rest position.

9. The push-button switch (1) according to one of the preceding claims, wherein the switch element (4) has at least one of the following elements: a snap-on disk, a piezoelectric element, an electromagnet, or a vibration element.

10. The push-button switch (1) according to one of the preceding claims, wherein a display (16) is arranged on the button cap (2).

11. A motor vehicle (40), **characterized in that** the motor vehicle (40) has a push-button switch according to one of claims 1 to 10.

## Revendications

1. Commutateur à effleurement (1) comprenant une cache de touche (2), une plaque de base (3), un élément de commutation (4), un premier levier (5) et un second levier (6), le premier levier (5) et le second levier (6) étant disposés rotatifs sur la plaque de base (3) au moyen chacun d'un palier rotatif (7) et l'élément de commutation (4) pouvant être actionné par une seconde extrémité de levier (9) du premier levier (5) ou par une seconde extrémité de levier (9) du second levier (6), **caractérisé en ce que** l'élément de commutation (4) est agencé sur la cache de touche (2) et le premier levier (5) et le second levier (6) sont raccordés respectivement, au niveau d'une première extrémité de levier (8), de manière mobile et dans la direction d'actionnement du commutateur à effleurement (1) sans jeu, avec la cache de touche (2) et, au niveau de la seconde extrémité de levier (9), de manière mobile et dans la direction d'actionnement du commutateur à effleurement (1) sans jeu, l'un à l'autre.

2. Commutateur à effleurement (1) selon la revendication 1, le premier levier (5) et le second levier (6) étant disposés sans jeu sur la plaque de base (3).

3. Commutateur à effleurement (1) selon la revendication 1 ou 2, les paliers rotatifs (7) disposant chacun d'un support (10) et d'au moins un dispositif de retenue (11, 12).

4. Commutateur à effleurement (1) selon la revendication 3, au moins un dispositif de retenue (11, 12) étant un composant séparé, qui est raccordé à la plaque de base (3).

5. Commutateur à effleurement (1) selon une des revendications précédentes, la première extrémité de levier (8) du premier levier (5) et la première extrémité de levier (8) du second levier (6) venant en prise dans des rainures correspondantes (13) dans la cache de touche (2).

6. Commutateur à effleurement (1) selon une des revendications précédentes, la seconde extrémité de levier (9) du premier levier (5) et la seconde extrémité de levier (9) du second levier (6) étant engrenées.

7. Commutateur à effleurement (1) selon une des revendications précédentes, le premier levier (5) et le second levier (6) étant disposés sur la plaque de base (3) de manière centrée ou excentrée.

8. Commutateur à effleurement (1) selon une des revendications précédentes, la plaque de base (3) présentant une butée (14) pour le premier levier (5) ou le second levier (6), qui définit une position de repos.

9. Commutateur à effleurement (1) selon une des revendications précédentes, l'élément de commutation (4) présentant au moins un des éléments suivants : un disque à déclic, un élément piézoélectrique, un électroaimant ou un élément de vibration.

10. Commutateur à effleurement (1) selon une des revendications précédentes, un écran (16) étant disposé sur la cache de touche (2).

11. Véhicule automobile (40), **caractérisé en ce que** le véhicule automobile (40) présente un commutateur à effleurement selon une des revendications 1 à 10.
